# EUROPÄISCHE PATENTSCHRIFT

(11) **EP 3 450 357 B1**
(45) Veröffentlichungstag und Bekanntmachung des Hinweises auf die Patenterteilung: **19.02.2020**
(21) Anmeldenummer: 18178694.8
(22) Anmeldetag: 20.06.2018
(51) Int. Cl.: B65G 29/00, B65G 31/04, B65G 69/04

(54) **WURFVORRICHTUNG ZUM AUSWERFEN VON HACKGUT**
EJECTION DEVICE FOR EJECTING CHIPS
DISPOSITIF DE LANCÉ PERMETTANT D'ÉJECTER LES COPEAUX

(30) Priorität: 29.08.2017 AT 507172017
(43) Veröffentlichungstag der Anmeldung: 06.03.2019
(73) Patentinhaber: Mus-Max GmbH, 8522 Gross St. Florian (AT)
(72) Erfinder: Urch, Erich, 8522 Groß St. Florian (AT); Urch, Robert, 8522 Groß St. Florian (AT)
(74) Vertreter: Patentanwaltskanzlei Matschnig & Forsthuber OG

(56) Entgegenhaltungen:
- EP-A1- 2 385 006
- CH-A- 503 639
- JP-U- S55 137 906
- US-A- 5 357 877

## Beschreibung

Die Erfindung betrifft eine Wurfvorrichtung zum Auswerfen von Hackgut, umfassend ein durch ein Antriebsmittel in Rotation um eine Drehachse versetzbares Wurfrad mit Schaufelflächen aufweisenden Wurfflügeln, wobei das Wurfrad von einer Gehäusetrommel umgeben ist, die eine zur Zufuhr des Hackguts vorgesehene Eintrittsöffnung und eine Austrittsöffnung zum Auswurf des Hackguts aufweist, wobei im Betrieb der Wurfvorrichtung die Wurfflügel des in Rotation versetzten Wurfrades das über die Eintrittsöffnung zugeführte Hackgut erfassen und durch die Austrittsöffnung auswerfen. Das Hackgut, welches üblicherweise durch entsprechende Holzhackmaschinen in normgerechten Größen hergestellt wurde, wird einer Wurfvorrichtung zugeführt, wobei das Hackgut mit Hilfe des Wurfrades sowie den daran angeordneten Wurfflügeln auf ein nächst gelegenes Transportmittel ausgeworfen wird. Die normgerechte Größe des Hackguts soll dabei beibehalten werden.

Zwischen dem Wurfrad und der Gehäusetrommel ist ein möglichst geringer Abstand vorgesehen, der es erlaubt, dass das Wurfrad bzw. die Wurfflügel eine Drehbewegung ausführt ohne an der Gehäusetrommel zu reiben und Verluste bei der Fördermenge gering zu halten.

Es kann jedoch vorkommen, dass Hackgut während des Auswurfvorgangs in den Zwischenraum zwischen Gehäusetrommel und Wurfflügel gelangt, wobei das verhakte Hackgut je nach Größe und Form durch die ausübende Kraft des rotierenden Wurfrades weiter zerkleinert bzw. zerrieben wird und aufgrund der entstehenden Reibwirkung die Drehleistung des Wurfrades drosselt.

Das oben beschriebene Zerkleinern bzw. Zerreiben erzeugt darüber hinaus Feinstaub aus Holz, der über die Wurfvorrichtung ebenso mit dem übrigen Hackgut ausgeworfen wird und bei einer späteren Anwendung als Brennstoff die Heizleistung vermindert.

Vorrichtungen zum Auswerfen von Hackgut gemäß dem Oberbegriff des Anspruchs 1 sind beispielsweise aus den Patentschriften US 5357877 A und CH 503639 A bekannt, auch EP 2385006 A1 offenbart eine Austragsvorrichtung für Hackschnitzel.

Es ist eine Aufgabe der Erfindung eine verbesserte Wurfvorrichtung bereitzustellen, die ein Zerkleinern bzw. Zerreiben des Hackguts vermindert.

Diese Aufgabe wird dadurch gelöst, dass zumindest ein Wurfflügel zumindest ein von der jeweiligen Schaufelfläche separates Endstück aufweist, welches verschwenkbar ist und dessen Ausrichtung bzw. Position von einem eingeklappten Zustand bis hin zu einem vollständig ausgeklappten Zustand veränderbar ist, wobei das Endstück im eingeklappten Zustand der jeweiligen Schaufelfläche in radialer Erstreckung zumindest zum Teil übersteht.

Durch die klappbaren bzw. verschwenkbaren Endstücke ist ein Verkanten des Hackguts zwischen den Wurfflügeln und der Gehäusetrommel weitestgehend ausgeschlossen, da die Endstücke zurückweichen können.

Hierbei kann vorgesehen sein, dass das zumindest eine Endstück in Form einer Platte ausgebildet ist.

Ebenso bei Fremdkörpereinwirkung, insbesondere durch metallische Gegenstände, die in dem zum Hacken in der Holzhackmaschine vorgesehenen Holz vorhanden sein können, beispielsweise Nägel oder Schrauben, weichen die Endstücke zurück, wobei kein Schaden am Wurfrad bzw. an den Wurfflügeln entsteht.

Unter einem vollständig ausgeklappten Zustand ist zu verstehen, dass sich das zumindest eine Endstück in einer solchen Position befindet, dass eine weitere Bewegung des Endstücks gegen die Drehrichtung des Wurfrades nicht mehr möglich ist.

Es kann vorgesehen sein, dass sich das zumindest eine Endstück im Betrieb der Wurfvorrichtung aufgrund der durch die Rotationsbewegung erzeugten Zentrifugalkraft in den eingeklappten Zustand ausrichtet.

Weiterhin ist es vorteilhaft, wenn das zumindest eine Endstück aus Metall gefertigt ist bzw. aus einem Material, welches ungefähr der Dichte eines Metalls entspricht.

Insbesondere ist das Endstück aus einem Material gefertigt, welches ein solches Gewicht besitzt, dass sich das Endstück bei einer Rotationsbewegung des Wurfrades in radialer Richtung zur Drehachse ausrichtet, wobei der durch eine plattenförmige Gestalt des Endstücks und durch die Rotation einwirkende Luftwiderstand vernachlässigbar ist, zumindest in einer Weise vernachlässigbar, dass der einwirkende Luftwiderstand einer Ausrichtung des Endstücks radial zur Drehachse nicht entgegenwirkt.

Vorzugsweise können am radial äußeren Ende des zumindest einen Endstücks - gesehen in einem eingeklappten Zustand des Endstücks - Vorsprünge angeordnet sein. Diese bewirken, dass durch die Drehbewegung erzeugte Geräusche gemindert werden.

Weiters kann vorgesehen sein, dass das zumindest eine Endstück bei durch Hackgut erzeugter Krafteinwirkung gegen die Drehrichtung des Wurfrades in Richtung des ausgeklappten Zustands nachgeben kann.

Hierbei ist gemeint, dass das zumindest eine Endstück erst dann nachgibt, wenn die durch Hackgut erzeugte Krafteinwirkung die Kraft, welche das zumindest eine Endstück in der Position des eingeklappten Zustands hält bzw. ausrichtet, übertrifft und so entgegenwirkt, dass das zumindest eine Endstück in Richtung des ausgeklappten Zustands bzw. des vollständig ausgeklappten Zustands zurückweicht.

Es kann günstig sein, wenn das zumindest eine Endstück zumindest ein Stellmittel aufweist, wobei sich das zumindest eine Endstück im außerbetrieblichen Zustand der Vorrichtung aufgrund des Stellmittels bereits in dem eingeklappten Zustand befindet.

Dabei kann es ferner günstig sein, wenn das zumindest eine Stellmittel bei einer durch Hackgut erzeugten Krafteinwirkung gegen die Drehrichtung des Wurfrades nachgeben kann und das zumindest eine Endstück in Richtung des ausgeklappten Zustands ausweicht.

Es kann vorgesehen sein, dass das Stellmittel in Form einer oder mehrerer Schrauben ausgebildet ist, wobei das zumindest eine Endstück an der entsprechenden Schaufelfläche des zumindest einen Wurfflügels angeschraubt ist. Die zuvor beschriebene erforderliche Krafteinwirkung durch Hackgut, welche ermöglicht, dass das zumindest eine Endstück in Richtung des ausgeklappten Zustands ausweicht, ist durch das verwendete Stellmittel erhöht.

Beim Erreichen dieser erforderlichen Kraft durch Hackgut, bricht die eine oder brechen die mehreren Schrauben und geben das zumindest eine Endstück gewissermaßen frei, sodass sich das Endstück in Richtung des ausgeklappten Zustands bewegen kann.

Es kann auch vorgesehen sein, dass das Stellelement in Form von einem oder mehreren elastischen Federelementen ausgebildet ist.

Es kann vorgesehen sein, dass der zumindest eine Wurfflügel einen Anschlag aufweist, der eine Bewegung des Endstücks gegen die Drehrichtung des Wurfrades begrenzt.

Dieser Anschlag bestimmt im Wesentlichen die Position des vollständig ausgeklappten Zustands des zumindest einen Endstücks.

Es kann ferner vorgesehen sein, dass das zumindest eine Endstück in seinem vollständig ausgeklappten Zustand einer gedachten, durch die Drehbewegung des radial äußersten Punktes des jeweiligen Wurfflügels um die Drehachse beschriebenen Kreislinie nicht übersteht.

So kann ein Stück des Hackguts, welches aufgrund seiner Größe die Lücke zwischen Gehäusetrommel und dem radial äußersten Ende des jeweiligen Wurfflügels passieren kann, durch das zurückweichende bzw. gegen die Drehrichtung klappbare Endstück, dessen Abstand zur Gehäusetrommel geringer ausfällt, von dem nächsten Wurfflügel erfasst werden, ohne dass sich dieses Stück des Hackguts in der Lücke zwischen Gehäusetrommel und Endstück verhakt bzw. stecken bleibt.

Dabei kann vorgesehen sein, dass der Abstand des radial äußersten Endes der Wurfflügel zur Gehäusetrommel im Wesentlichen der normgerechten Größe des jeweiligen Hackguts entspricht, wobei der Abstand je nach entsprechender Normgröße des Hackguts variieren kann.

Dadurch kann die Wahrscheinlichkeit des Blockierens der Wurfflügel bzw. des Wurfrades durch Hackgut um ein Vielfaches minimiert werden.

Auch beim Beschleunigen des Wurfrades ist dies von Vorteil, da durch den kleineren Durchmesser eine geringere Massenträgheit vorhanden ist.

Mit Vorteil kann vorgesehen sein, wenn mehrere, vorzugsweise jeder Wurfflügel zumindest ein Endstück aufweist.

Es kann auch vorgesehen sein, dass mehrere, vorzugsweise jeder Wurfflügel zumindest zwei oder mehrere Endstücke aufweist.

Vorteilhafterweise kann die Wurfvorrichtung ferner eine Schutzscheibe umfassen, die auf der der Eintrittsöffnung abgewandten Seite des Wurfrades angeordnet ist.

Dadurch soll eine Nachzerkleinerung (Verkanten bzw. Verhaken des Hackguts) in dem jeweiligen Spalt zwischen Wurfflügel und einer Gehäusetrommelwand, welche der Eintrittsöffnung abgewandt ist, vermieden werden.

Dabei kann die Schutzscheibe drehfest mit dem Wurfrad verbunden sein. Vorzugsweise ist das Wurfrad bzw. sind die Wurfflügel an der Schutzscheibe angeschweißt.

Es kann ferner günstig sein, wenn der Radius der Schutzscheibe mindestens der radialen Ausdehnung eines Wurfflügels entspricht.

Mit Vorteil kann vorgesehen sein, wenn die Schutzscheibe zumindest eine Öffnung aufweist, welche im Bereich zwischen in Umfangsrichtung der Schutzscheibe benachbarten Wurfflügeln angeordnet ist.

Ebenso kann vorgesehen sein, wenn die Schutzscheibe im Bereich zwischen in Umfangsrichtung der Schutzscheibe benachbarten Wurfflügeln eine Öffnung aufweist.

Hierbei kann es günstig sein, wenn die Schutzscheibe ferner zu jeder Öffnung eine korrespondierende Abdeckung aufweist, welche mit einem Befestigungsmittel an der Schutzscheibe befestigbar ist.

Solche Öffnungen können als Wartungsöffnungen dienen, sodass nicht das komplette Wurfrad ausgebaut werden muss. Hierzu wird lediglich die entsprechende Abdeckung abgenommen.

Es kann ferner vorgesehen sein, dass die Abdeckung eine geringere Dicke als die Schutzscheibe aufweist.

Dadurch kann das Gesamtgewicht der Schutzscheibe verringert werden bei gleichbleibender vorgesehener Funktionalität der Schutzscheibe.

In einer zweckmäßigen Ausführungsform können die Wurfflügel radial bzw. sternförmig um die Drehachse angeordnet sein.

Es kann günstig sein, wenn die Schaufelflächen orthogonal zur Drehrichtung positioniert sind.

Vorteilhafterweise können die Schaufelflächen in ihrer flächenhaften Ausdehnung in Richtung der Drehachse eine Verjüngung aufweisen.

Es kann günstig sein, wenn zumindest ein Wurfflügel zumindest einen in Drehrichtung vorstehenden Begrenzungsvorsprung aufweist.

Dies gewährleistet, dass das Hackgut beim Zuführen durch die Eintrittsöffnung besser durch die jeweilige Schaufelfläche erfasst wird und mehr Hackgut pro Wurfflügel ausgeworfen werden kann.

Ebenso kann es günstig sein, wenn zumindest ein Wurfflügel auf seiner der Schutzscheibe abgewandten Seite einen in Drehrichtung vorstehenden Begrenzungsvorsprung aufweist, der im Wesentlichen dem Kantenverlauf der Schaufelfläche folgt.

Mit Vorteil kann vorgesehen sein, wenn zumindest eine Schaufelfläche einen in Drehrichtung vorstehenden Führungsvorsprung aufweist, welcher auf der Schaufelfläche schräg zulaufend zur Eintrittsöffnung abgewandten Seite ausgerichtet ist.

Ein solcher Führungsvorsprung befördert das Hackgut, während der Drehbewegung des Wurfrads und der dadurch entstehenden Zentrifugalkraft weiter in Richtung der der Eintrittsöffnung abgewandten Seite des Wurfflügels, wodurch beim Auswurf des Hackguts ein gleichmäßigerer und gezielter Wurfstrahl erzeugt wird.

Nachfolgend wird die Erfindung anhand von beispielhaften Zeichnungen näher erläutert. Hierbei zeigt
Fig. 1 eine Seitenansicht einer beispielhaften Wurfvorrichtung,
Fig. 2 einen Querschnitt durch den Schnitt III-III von Fig. 1,
Fig. 3 ein beispielhaftes Wurfrad mit einem maximal ausgeklappten Endstück,
Fig. 4 eine Detailansicht des maximal ausgeklappten Endstücks aus Fig. 3,
Fig. 5 ein beispielhaftes Wurfrad mit Wurfflügeln und einer Schutzscheibe,
Fig. 6 eine Seitenansicht des Wurfrades aus Fig. 5,
Fig. 7 eine perspektivische Ansicht eines beispielhaften Wurfrades,
Fig. 8 eine perspektivische Ansicht eines beispielhaften Wurfrades mit einer Öffnungen und Abdeckungen aufweisenden Schutzscheibe,
Fig. 9 eine rückwärtige Ansicht des Wurfrades aus Fig. 8,
Fig. 10 eine weitere perspektivische Teilansicht des Wurfrades aus Fig. 8 und 9,
Fig. 11 eine weitere Teilansicht des Wurfrades aus Fig. 8, 9 und 10, und
Fig. 12 eine Draufsicht eines Wurfflügels aus dem beispielhaften Wurfrad aus Fig. 8, 9, 10 und 11 mit einem auf einer Schaufelfläche angeordneten Führungsvorsprung.

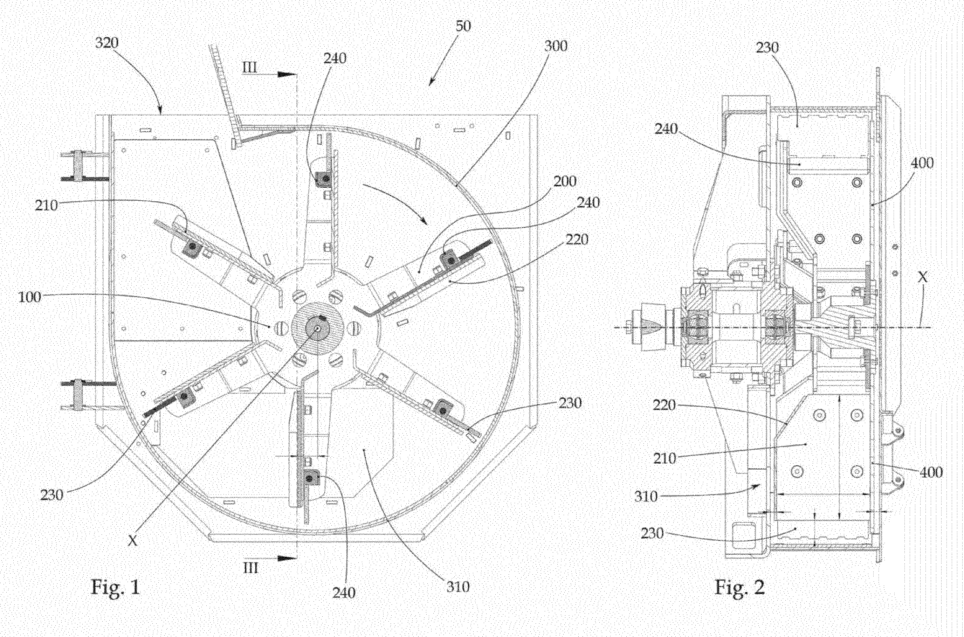

**Fig. 1** zeigt eine Seitenansicht einer beispielhaften Wurfvorrichtung **50** zum Auswerfen von Hackgut, umfassend ein durch ein Antriebsmittel, welches in den Figuren nicht gezeigt ist, in Rotation um eine Drehachse **X** versetzbares Wurfrad **100** mit Schaufelflächen **210** aufweisenden Wurfflügeln **200**, wobei das Wurfrad **100** von einer Gehäusetrommel **300** umgeben ist, die eine zur Zufuhr des Hackguts vorgesehene Eintrittsöffnung **310** und eine Austrittsöffnung **320** zum Auswurf des Hackguts aufweist.

Als Antriebsmittel kann beispielsweise ein Keilriemenantrieb, Hydraulikantrieb oder ein Getriebeantrieb, insbesondere ein Planetengetriebe, vorgesehen sein.

Die Wurfflügel **200** sind radial bzw. sternförmig um die Drehachse **X** an dem Wurfrad **100** angeordnet, wobei jeder Wurfflügel **200** eine im Wesentlichen orthogonal zur Drehrichtung angeordnete Schaufelfläche **210** aufweist. Von den in **Fig. 1** gezeigten Wurfflügeln **200** weisen drei Wurfflügel **200** einen in Drehrichtung vorstehenden Begrenzungsvorsprung **220** auf. In einer weiteren Ausführungsform kann jedoch auch vorgesehen sein, dass alle oder zumindest ein Wurfflügel **200** einen Begrenzungsvorsprung **220** aufweist.

Die Begrenzungsvorsprünge **220** gewährleisten, dass das Hackgut beim Zuführen durch die Eintrittsöffnung **310** besser durch die jeweilige Schaufelfläche **210** erfasst wird und mehr Hackgut pro Wurfflügel **200** ausgeworfen werden kann.

Weiters wird das Hackgut weniger nachzerkleinert, da weniger Reibung zwischen der jeweiligen Schaufelfläche **210** und der Gehäusetrommel **300** entsteht.

Ferner weisen die Wurfflügel **200** an ihrem radial äußeren Endabschnitt ein schwenkbar gelagertes Endstück **230** auf, welches eingerichtet ist, sich im Betrieb der Wurfvorrichtung **50** aufgrund der durch die Rotationsbewegung des Wurfrades **100** erzeugten Zentrifugalkraft in radialer Richtung zur Drehachse **X** des Wurfrades **100** auszurichten und dem jeweiligen Wurfflügel **200** in radialer Erstreckung überzustehen, und ferner bei einer der Ausrichtung in radialer Richtung zur Drehachse **X** entgegenwirkenden Krafteinwirkung durch Hackgut gegen die Drehrichtung des Wurfrades **100** nachzugeben.

Damit das jeweilige Endstück **230** bei Krafteinwirkung nachgibt, muss diese Krafteinwirkung so hoch sein, dass sie die Ausrichtung des Endstücks 230 in radialer Richtung zur Drehachse **X** durch die Zentrifugalkraft zumindest behindert.

Die Endstücke **230** in **Fig. 1** befinden sich in einem ausgeklappten Zustand und verlaufen parallel zur Schaufelfläche **210** des jeweiligen Wurfflügels **200.**

Wie unter anderem in **Fig. 2** zu sehen ist, welche einen Querschnitt durch den Schnitt III-III aus **Fig. 1** zeigt, weisen die Schaufelflächen **210** in ihrer flächenhaften Ausdehnung in Richtung der Drehachse **X** eine Verjüngung auf. Weiters ist ersichtlich, dass die Begrenzungsvorsprünge **220** auf der der Eintrittsöffnung **310** zugewandten Seite angeordnet sind und im Wesentlichen dem Kantenverlauf der jeweiligen Schaufelfläche **210** folgt.

In einer weiteren Ausführungsform kann vorgesehen sein, dass die Begrenzungsvorsprünge **220** sowohl auf der der Eintrittsöffnung **310** zugewandten als auch abgewandten Seite der Schaufelflächen **210** angeordnet sind.

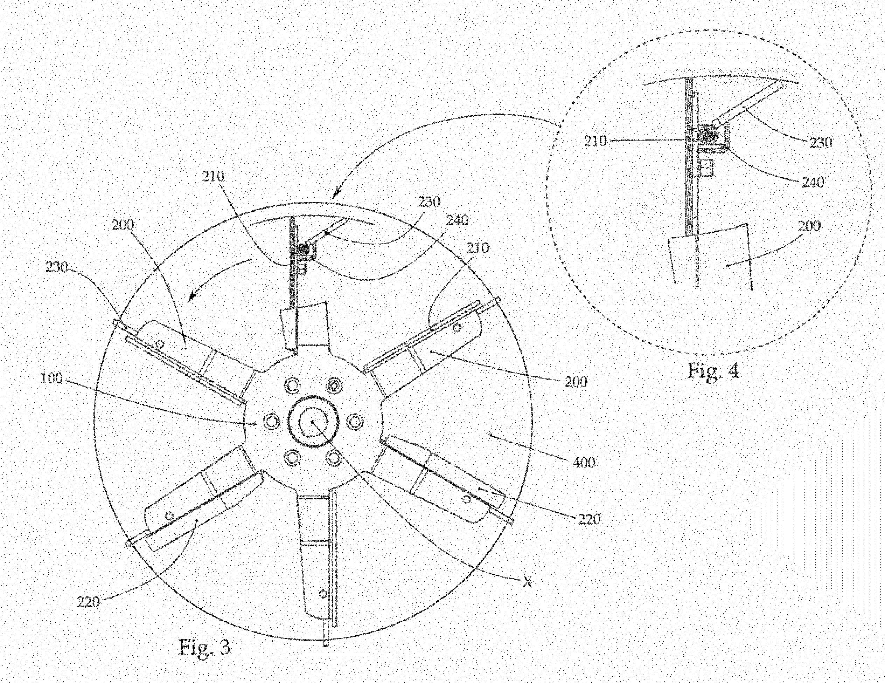

**Fig. 3** zeigt einen Endabschnitt **230**, der in einem maximal eingeklappten Zustand einer gedachten, durch die Drehbewegung des radial äußersten Punktes des jeweiligen Wurfflügels **200** beschriebenen Kreislinie nicht übersteht. Hierzu kann ein Anschlag **240** vorgesehen sein, welcher auf der Rückseite der jeweiligen Schaufelflächen **210** angeordnet ist und Bewegung des Endstücks **230** gegen die Drehrichtung des Wurfrades **100** begrenzt.

In **Fig. 3** ist ein Teil des durch den entsprechenden Wurfflügel **200** beschriebenen Kreises eingezeichnet. **Fig. 4** zeigt eine Detailansicht des eingeklappten Endabschnitts **230** aus **Fig. 3****.**

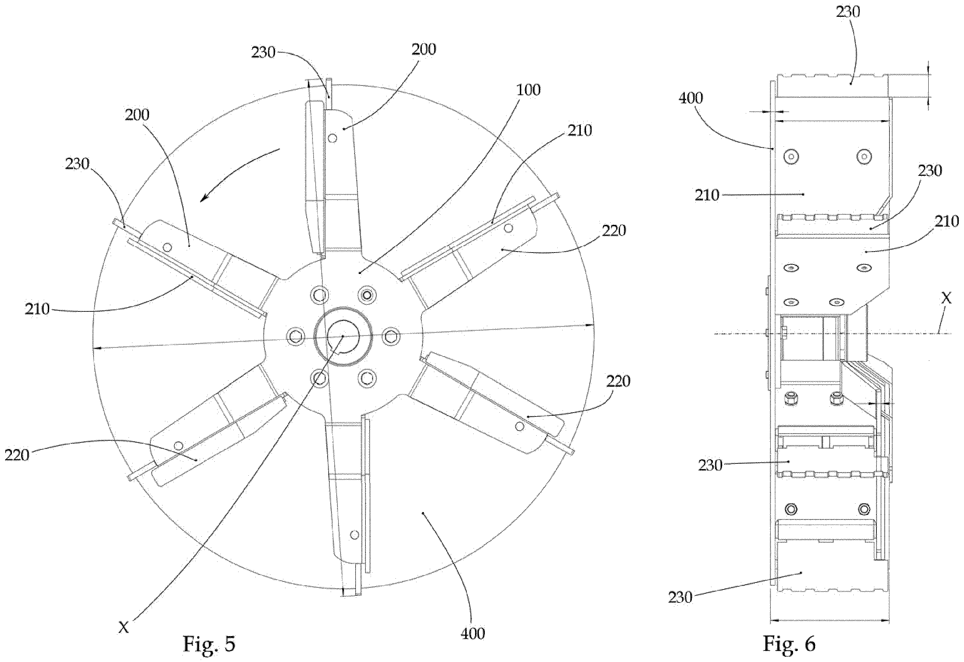

**Fig. 5** zeigt ein beispielhaftes Wurfrad **100** mit Wurfflügeln **200** und einer Schutzscheibe **400**, die drehfest mit dem Wurfrad **100** verbunden ist und in der Regel auf der der Eintrittsöffnung **310** abgewandten Seiten des Wurfrades **100** angeordnet ist, was in **Fig. 2** genauer ersichtlich ist. Ferner entspricht der Radius der Schutzscheibe **400** mindestens der radialen Ausdehnung eines Wurfflügels **200**, wobei der Radius der Schutzscheibe **400** in **Fig. 5** zwischen dem radial äußersten Ende eines Wurfflügels **200** und dem radial äußersten Ende des ausgeklappten Endabschnitts **230** dieses Wurfflügels **200** liegt, d.h. die Endstücke **230** der Schutzscheibe **400** in radialer Richtung überstehen. **Fig. 6** zeigt das Profil des Wurfrades aus **Fig. 5**, wobei hier eindeutig zu sehen ist, dass kein Zwischenraum Wurfrad **100** bzw. Wurfflügeln **200** und der Schutzscheibe **400** vorhanden ist.

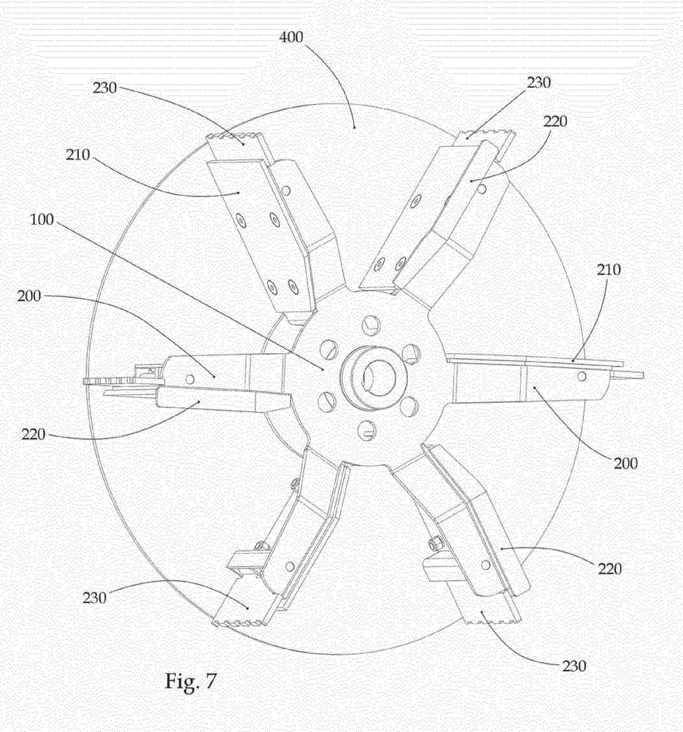

**Fig. 7** zeigt eine perspektivische Ansicht des Wurfrades aus **Fig. 5** und **6**, wobei in dieser Ansicht die Begrenzungsvorsprünge **220** und deren Anordnung besser ersichtlich sind.

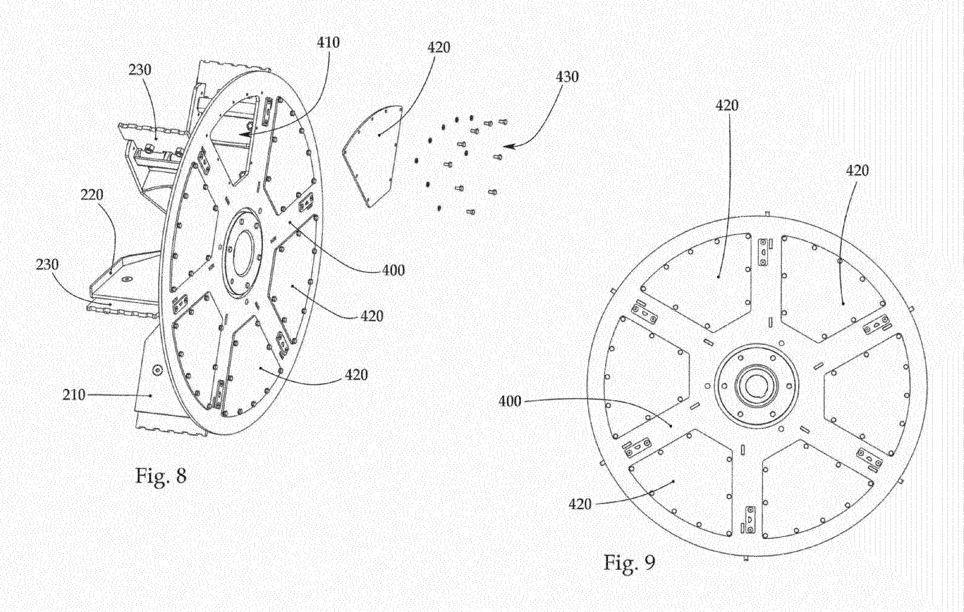

In **Fig. 8** und **9** ist eine weitere beispielhafte Ausführung einer Schutzscheibe **400** dargestellt, wobei die Schutzscheibe **400** Öffnungen **410** aufweist, die zwischen in Umfangsrichtung der Schutzscheibe **400** benachbarten Wurfflügeln **200** angeordnet sind.

Solche Öffnungen **410** können als Wartungsöffnungen dienen, sodass nicht das komplette Wurfrad **100** bei Reparaturen ausgebaut werden muss.

Um die Funktionalität der Schutzscheibe **400** weiterhin zu gewährleisten, ist zu jeder Öffnung **410** eine dazu korrespondierende Abdeckung **420** vorgesehen, welche mit einem Befestigungsmittel **430** an der Schutzscheibe **400** befestigbar ist. Als Befestigungsmittel **430** können beispielsweise Schrauben vorgesehen sein, wie in **Fig. 8** zu sehen ist.

Da die Abdeckungen **420** eine Millimeter von der Schutzscheibe **400** in Richtung einer angrenzenden Wand der Gehäusetrommel **300** vorstehen können, wird hierdurch auch automatisch der Zwischenraum zwischen Schutzscheibe **400** und der angrenzenden Wand der Gehäusetrommel **300** von abgelagerten Hackschnitzeln bzw. Hackschnitzelstaub befreit bzw. gereinigt.

Es ist vorteilhaft, wenn die Abdeckungen **420** jeweils eine geringere Dicke als die Schutzscheibe **400** aufweisen. Dadurch kann das Gesamtgewicht der Schutzscheibe **400** verringert werden bei gleichbleibender vorgesehener Funktionalität der Schutzscheibe **400.**

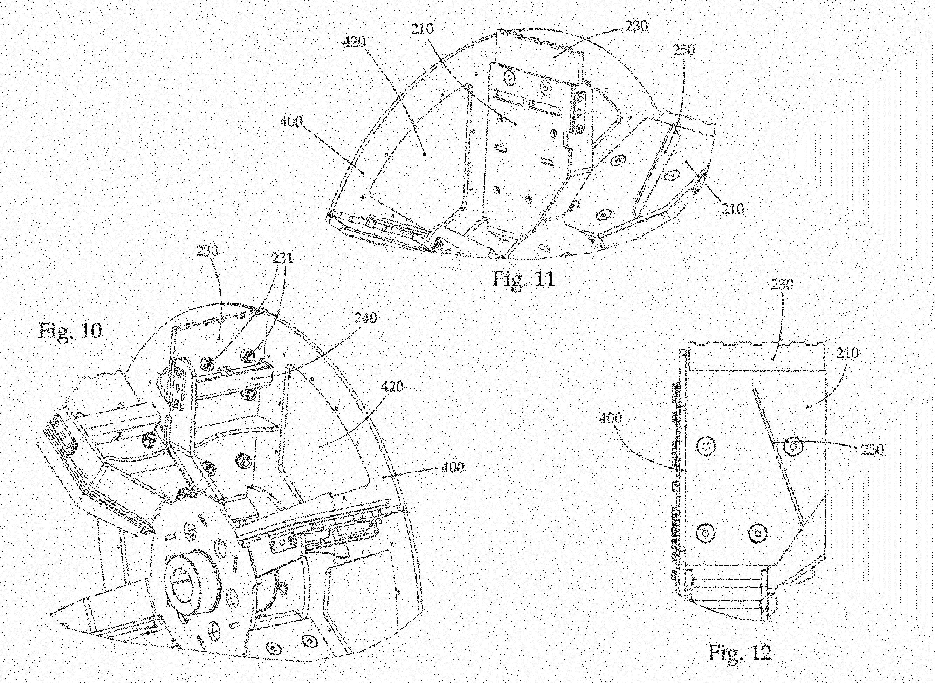

**Fig. 10** zeigt eine perspektivische Teilansicht eines Wurfrades **100** mit einer Öffnungen **410** und Abdeckungen **420** aufweisenden Schutzscheibe **400.** In diesem Beispiel ist zu sehen, dass die Endstücke **230** mittels einem Halterungsmittel **231** an der Schaufelfläche **410** befestigt ist, wobei eine solche Halterung eine erhöhte Krafteinwirkung durch Hackgut erfordert, um zu brechen. Das Halterungsmittel **231** kann demnach als gewollte Sollbruchstelle interpretiert werden.

Bei einem möglichen Einklemmen von Hackgut zwischen dem Endstück **230** und der Gehäusetrommel **300** ist das Halterungsmittel **231**, beispielsweise Schrauben, so gewählt, dass diese brechen und das entsprechende Endstück **230** gegen die Drehrichtung des Wurfrades **100** ausweichen kann, wie oben bereits beschrieben, bevor das Wurfrades **100** in seiner Drehbewegung blockiert bzw. behindert wird.

Weiters kann zumindest eine Schaufelfläche **210** einen in Drehrichtung vorstehenden Führungsvorsprung **250** aufweisen, welcher auf der Schaufelfläche **210** schräg zulaufend zur Eintrittsöffnung **310** abgewandten Seite der Schaufelfläche **210** ausgerichtet ist, wie in **Fig. 11** und **12** zu sehen ist.

Der Führungsvorsprung **250** befördert das Hackgut während der Drehbewegung des Wurfrads **100** und der dadurch entstehenden Zentrifugalkraft weiter in Richtung der der Eintrittsöffnung **310** abgewandten Seite des Wurfflügels **200** bzw. der jeweiligen Schaufelfläche **210**, wodurch beim Auswurf des Hackguts über die Austrittsöffnung **320** ein gleichmäßigerer und gezielter Wurfstrahl erzeugt wird.

**BEZUGSZEICHENLISTE**

| | |
|---|---|
| Wurfvorrichtung | 50 |
| Wurfrad | 100 |
| Wurfflügel | 200 |
| Schaufelflächen | 210 |
| Begrenzungsvorsprung | 220 |
| Endstück | 230 |
| Halterungsmittel | 231 |
| Anschlag | 240 |
| Führungsvorsprung | 250 |
| Gehäusetrommel | 300 |
| Eintrittsöffnung | 310 |
| Austrittsöffnung | 320 |
| Schutzscheibe | 400 |
| Öffnungen | 410 |
| Abdeckung | 420 |
| Befestigungsmittel | 430 |
| Drehachse | X |

## Patentansprüche

1. Wurfvorrichtung (50) zum Auswerfen von Hackgut, umfassend ein durch ein Antriebsmittel in Rotation um eine Drehachse (X) versetzbares Wurfrad (100) mit Wurfflügeln (200), welche zumindest eine Schaufelfläche (210) aufweisen, wobei das Wurfrad (100) von einer Gehäusetrommel (300) umgeben ist, die eine zur Zufuhr des Hackguts vorgesehene Eintrittsöffnung (310) und eine Austrittsöffnung (320) zum Auswurf des Hackguts aufweist, wobei im Betrieb der Wurfvorrichtung die Wurfflügel (200) des in Rotation versetzten Wurfrades (100) das über die Eintrittsöffnung (310) zugeführte Hackgut erfassen und durch die Austrittsöffnung (320) auswerfen,
**dadurch gekennzeichnet, dass**
zumindest ein Wurfflügel (200) zumindest ein von der jeweiligen Schaufelfläche (210) separates Endstück (230) aufweist, welches verschwenkbar ist und dessen Ausrichtung bzw. Position von einem eingeklappten Zustand bis hin zu einem vollständig ausgeklappten Zustand veränderbar ist, wobei das Endstück (230) im eingeklappten Zustand der jeweiligen Schaufelfläche (210) in radialer Erstreckung zumindest zum Teil übersteht.

2. Vorrichtung nach Anspruch 1, **dadurch gekennzeichnet, dass** das zumindest eine Endstück (230) sich im Betrieb der Wurfvorrichtung (50) aufgrund der durch die Rotationsbewegung des Wurfrades (100) erzeugten Zentrifugalkraft in den eingeklappten Zustand ausrichtet.

3. Vorrichtung nach Anspruch 2, **dadurch gekennzeichnet, dass** das zumindest eine Endstück (230) bei durch Hackgut erzeugter Krafteinwirkung gegen die Drehrichtung des Wurfrades (100) in Richtung des ausgeklappten Zustands nachgeben kann.

4. Vorrichtung nach einem der Ansprüche 1 bis 3, **dadurch gekennzeichnet, dass** das zumindest eine Endstück (230) zumindest ein Stellmittel (231) aufweist, wobei sich das zumindest eine Endstück (230) im außerbetrieblichen Zustand der Vorrichtung (50) aufgrund des Stellmittels (231) in dem eingeklappten Zustand befindet, wobei vorzugsweise das zumindest eine Stellmittel (231) bei einer durch Hackgut erzeugten Krafteinwirkung gegen die Drehrichtung des Wurfrades (100) nachgeben kann und das zumindest eine Endstück (230) in Richtung des ausgeklappten Zustands ausweicht.

5. Vorrichtung nach einem der Ansprüche 1 bis 4, **dadurch gekennzeichnet, dass** der zumindest ein Wurfflügel (200) einen Anschlag (240) aufweist, der eine Bewegung des Endstücks (230) gegen die Drehrichtung des Wurfrades (100) begrenzt.

6. Vorrichtung nach einem der Ansprüche 1 bis 5, **dadurch gekennzeichnet, dass** das zumindest eine Endstück (230) in seinem vollständig ausgeklappten Zustand einer gedachten, durch die Drehbewegung des radial äußersten Punktes des jeweiligen Wurfflügels (200) um die Drehachse (X) beschriebenen Kreislinie nicht übersteht.

7. Vorrichtung nach einem der Ansprüche 1 bis 6, **dadurch gekennzeichnet, dass** mehrere, vorzugsweise jeder Wurfflügel (200) zumindest ein Endstück (230) aufweist.

8. Vorrichtung nach einem der Ansprüche 1 bis 7, **dadurch gekennzeichnet, dass** die Wurfvorrichtung (50) ferner eine Schutzscheibe (400) umfasst, die auf der der Eintrittsöffnung (310) abgewandten Seite des Wurfrades (100) angeordnet ist, wobei vorzugsweise die Schutzscheibe (400) drehfest mit dem Wurfrad (100) verbunden ist, wobei insbesondere der Radius der Schutzscheibe (400) mindestens der radialen Ausdehnung eines Wurfflügels (200) entspricht.

9. Vorrichtung nach Anspruch 8, **dadurch gekennzeichnet, dass** die Schutzscheibe (400) zumindest eine Öffnung (410) aufweist, welche im Bereich zwischen in Umfangsrichtung der Schutzscheibe (400) benachbarten Wurfflügeln (200) angeordnet ist, wobei vorzugsweise die Schutzscheibe (400) im Bereich zwischen in Umfangsrichtung der Schutzscheibe (400) benachbarten Wurfflügeln (200) die Öffnung (410) aufweist.

10. Vorrichtung nach Anspruch 8 oder 9, **dadurch gekennzeichnet, dass** die Schutzscheibe (400) ferner zu jeder Öffnung (410) eine korrespondierende Abdeckung (420) aufweist, welche mit einem Befestigungsmittel (430), beispielsweise Schrauben, an der Schutzscheibe (400) befestigbar ist, wobei vorzugsweise die Abdeckung (420) eine geringere Dicke als die Schutzscheibe (400) aufweist.

11. Vorrichtung nach einem der Ansprüche 1 bis 10, **dadurch gekennzeichnet, dass** die Wurfflügel (200) radial bzw. sternförmig um die Drehachse (X) angeordnet sind.

12. Vorrichtung nach einem der Ansprüche 1 bis 11, **dadurch gekennzeichnet, dass** die Schaufelflächen (210) in ihrer flächenhaften Ausdehnung in Richtung der Drehachse (X) eine Verjüngung aufweisen.

13. Vorrichtung nach einem der Ansprüche 1 bis 12, **dadurch gekennzeichnet, dass** zumindest ein Wurfflügel (200) zumindest einen in Drehrichtung vorstehenden Begrenzungsvorsprung (220) aufweist.

14. Vorrichtung nach einem der Ansprüche 8 bis 12, **dadurch gekennzeichnet, dass** zumindest ein Wurfflügel (200) auf seiner der Schutzscheibe (400) abgewandten Seite einen in Drehrichtung vorstehenden Begrenzungsvorsprung (220) aufweist, der im Wesentlichen dem Kantenverlauf der Schaufelfläche (210) folgt.

15. Vorrichtung nach einem der Ansprüche 1 bis 14, **dadurch gekennzeichnet, dass** zumindest eine Schaufelfläche (210) einen in Drehrichtung vorstehenden Führungsvorsprung (250) aufweist, welcher auf der Schaufelfläche (210) schräg zulaufend zur Eintrittsöffnung (310) abgewandten Seite ausgerichtet ist.

## Claims

1. An ejection device (50) for ejecting chips, comprising an ejection wheel (100) which can be caused to rotate about a rotational axis (X) by a drive means and has ejection blades (200), which comprise at least one vane surface (210), wherein the ejection wheel (100) is surrounded by a housing drum (300), which comprises an entry opening (310) provided for feeding in the chips and an exit opening (320) for ejecting the chips, wherein, during the operation of the ejection device, the ejection blades (200) of the ejection wheel (100), which is caused to rotate, collect the chips fed via the entry opening (310) and eject the latter through the exit opening (320), **characterised in that**
at least one ejection blade (200) comprises at least one end piece (230) separate from the respective vane surface (210), which end piece can be swivelled and its orientation or position can be changed from a folded-up state into a completely unfolded state, wherein the end piece (230) in the folded-up state of the respective vane surface (210) projects at least partially in the radial extension.

2. The device according to claim 1, **characterised in that** the at least one end piece (230) is orientated in the folded-up state during the operation of the ejection device (50) on account of the centrifugal force generated by the rotary motion of the ejection wheel (100).

3. The device according to claim 2, **characterised in that** the at least one end piece (230) can give way into the direction of the unfolded state in the presence of a force effect generated by chips against the direction of rotation of the ejection wheel (100).

4. The device according to any one of claims 1 to 3, **characterised in that** the at least one end piece (230) comprises at least one adjusting means (231), wherein the at least one end piece (230) is in the folded-up state in the non-operational state of the device (50) due to the adjusting means (231), wherein the at least one adjusting means (231) can preferably give away in the presence of a force effect generated by chips against the direction of rotation of the ejection wheel (100) and the at least one end piece (230) diverts into the direction of the unfolded state.

5. The device according to any one of claims 1 to 4, **characterised in that** the at least one ejection blade (200) comprises a stop (240), which limits a movement of the end piece (230) against the direction of rotation of the ejection wheel (100).

6. The device according to any one of claims 1 to 5, **characterised in that** the at least one end piece (230) in its completely unfolded state does not project beyond an imaginary circle line described by the rotary motion of the radially outermost point of the respective ejection blade (200) about the rotational axis (X).

7. The device according to any one of claims 1 to 6, **characterised in that** a plurality of, preferably each one of the ejection blades (200) comprises at least one end piece (230).

8. The device according to any one of claims 1 to 7, **characterised in that** ejection device (50) further comprises a protection disc (400), which is arranged on the side of the ejection wheel (100) facing away from the entry opening (310), wherein the protection disc (400) is preferably non-rotatably connected to the ejection wheel (100), wherein in particular the radius of the protection disc (400) corresponds at least to the radial extension of an ejection blade (200).

9. The device according to claim 8, **characterised in that** protection disc (400) comprises at least one opening (410), which is arranged in the region between the ejection blades (200) lying adjacent in the circumferential direction of the protection disc (400), wherein the protection disc (400) preferably comprises the opening (410) in the region between ejection blades (200) lying adjacent in the circumferential direction of the protection disc (400).

10. The device according to claim 8 or 9, **characterised in that** the protection disc (400) also comprises a corresponding cover (420) with respect to each opening (410), which cover can be fastened to the protection disc (400) with a fastening means (430), for example screws, wherein the cover (420) preferably has a smaller thickness than the protection disc (400).

11. The device according to any one of claims 1 to 10, **characterised in that** the ejection blades (200) are arranged radially or star-shaped around the rotational axis (X).

12. The device according to any one of claims 1 to 11, **characterised in that** the vane surfaces (210) have a narrowing in their areal extension in the direction of the rotational axis (X).

13. The device according to any one of claims 1 to 12, **characterised in that** at least one ejection blade (200) comprises at least one limiting projection (220) projecting in the direction of rotation.

14. The device according to any one of claims 8 to 12, **characterised in that** at least one ejection blade (200) comprises, on its side facing away from the protection disc (400), a limiting projection (220) projecting in the direction of rotation, which essentially follows the course of the edge of the vane surface (210).

15. The device according to any one of claims 1 to 14, **characterised in that** at least one vane surface (210) comprises a guide projection (250) projecting in the direction of rotation, which is aligned on the side facing away from the vane surface (210) running obliquely towards the exit opening (310).

## Revendications

1. Dispositif d'éjection (50), destiné à éjecter des produits hachés, comprenant une roue d'éjection (100), susceptible d'être amenée en rotation autour d'un axe de rotation (X) par un moyen d'entraînement, pourvue d'ailettes d'éjection (200), lesquelles comprennent au moins une surface d'aube (210), la roue d'éjection (100) étant entourée d'un tambour formant carter (300), qui comporte une ouverture d'entrée (310), prévue pour l'alimentation des produits hachés et une ouverture de sortie (320) pour l'éjection des produits hachés, en service du dispositif d'éjection, les ailettes d'éjection (200) de la roue d'éjection (100) amenée en rotation saisissant les produits hachés alimentés par l'intermédiaire de l'ouverture d'entrée (310) et les éjectant à travers l'ouverture de sortie (320),
**caractérisé en ce**
**qu'**au moins une ailette d'éjection (200) comporte au moins une pièce d'extrémité (230) séparée de la surface d'aube (210) respective, laquelle est susceptible de pivoter et dont l'orientation ou la position est variable d'un état escamoté jusqu'à un état totalement déployé, dans l'état escamoté de la surface d'aube (210) respective, la pièce d'extrémité (230) débordant au moins en partie dans l'extension radiale.

2. Dispositif selon la revendication 1, **caractérisé en ce qu'**en service du dispositif d'éjection (50), en raison de la force centrifuge générée par le déplacement en rotation de la roue d'éjection (100), l'au moins une pièce d'extrémité (230) s'oriente dans l'état escamoté.

3. Dispositif selon la revendication 2, **caractérisé en ce que** sous l'effet d'une force générée par les produits hachés à l'encontre de la direction de rotation de la roue d'éjection (100), l'au moins une pièce d'extrémité (230) est susceptible de céder dans la direction de l'état déployé.

4. Dispositif selon l'une quelconque des revendications 1 à 3, **caractérisé en ce que** l'au moins une pièce d'extrémité (230) comporte au moins un moyen de réglage (231), dans l'état hors service du dispositif (50), en raison du moyen de réglage (231), l'au moins une pièce d'extrémité (230) se trouvant dans l'état escamoté, sous l'effet d'une force générée par les produits hachés à l'encontre de la direction de rotation de la roue d'éjection (100), de préférence l'au moins un moyen de réglage (231) étant susceptible de céder et l'au moins une pièce d'extrémité (230) déviant dans la direction de l'état déployé.

5. Dispositif selon l'une quelconque des revendications 1 à 4, **caractérisé en ce que** l'au moins une ailette d'éjection (200) comporte une butée (240) qui délimite un déplacement de la pièce d'extrémité (230) à l'encontre de la direction de rotation de la roue d'éjection (100).

6. Dispositif selon l'une quelconque des revendications 1 à 5, **caractérisé en ce que** dans son état totalement déployé, l'au moins une pièce d'extrémité (230) ne déborde pas d'une ligne circulaire virtuelle, décrite par le déplacement en rotation du point extérieur extrême en direction radiale de l'ailette d'éjection (200) respective autour de l'axe de rotation (X).

7. Dispositif selon l'une quelconque des revendications 1 à 6, **caractérisé en ce que** plusieurs, de préférence chaque ailette(s) d'éjection (200) comporte au moins une pièce d'extrémité (230).

8. Dispositif selon l'une quelconque des revendications 1 à 7, **caractérisé en ce que** le dispositif d'éjection (50) comporte par ailleurs un écran protecteur (400) qui est placé sur le côté de la roue d'éjection (100) qui est opposé à l'ouverture d'entrée (310), de préférence l'écran protecteur (400) étant relié de manière solidaire en rotation avec la roue d'éjection (100), notamment le rayon de l'écran protecteur (400) correspondant au moins à l'extension radiale d'une ailette d'éjection (200).

9. Dispositif selon la revendication 8, **caractérisé en ce que** l'écran protecteur (400) comporte au moins une ouverture (410), laquelle est placée dans la région entre des ailettes d'éjection (200) voisines dans la direction périphérique de l'écran protecteur (400), l'écran protecteur (400) comportant de préférence l'ouverture (410) dans la région entre des ailettes d'éjection (200) voisines dans la direction périphérique de l'écran protecteur (400).

10. Dispositif selon la revendication 8 ou 9, **caractérisé en ce que** l'écran protecteur (400) comporte par ailleurs un recouvrement (420) correspondant à chaque ouverture (410), lequel est susceptible d'être fixé par un moyen de fixation (430), par exemple des vis sur l'écran protecteur (400), de préférence le recouvrement (420) ayant une épaisseur inférieure à celle de l'écran protecteur (400) t.

11. Dispositif selon l'une quelconque des revendications 1 à 10, **caractérisé en ce que** les ailettes d'éjection (200) sont placées en direction radiale ou en forme d'étoile autour de l'axe de rotation (X).

12. Dispositif selon l'une quelconque des revendications 1 à 11, **caractérisé en ce que** dans leur extension superficielle en direction de l'axe de rotation (X), les surfaces d'aube (210) comportent un rétrécissement.

13. Dispositif selon l'une quelconque des revendications 1 à 12, **caractérisé en ce qu'**au moins une ailette d'éjection (200) comporte au moins une saillie de délimitation (220) débordant dans la direction de rotation.

14. Dispositif selon l'une quelconque des revendications 8 à 12, **caractérisé en ce que** sur son côté opposé à l'écran protecteur (400), au moins une ailette d'éjection (200) comporte une saillie de délimitation (220) débordant dans la direction de rotation, qui suit sensiblement le trajet de l'arête de la surface d'aube (210).

15. Dispositif selon l'une quelconque des revendications 1 à 14, **caractérisé en ce qu'**au moins une surface d'aube (210) comporte une saillie de guidage (250) débordant dans la direction de rotation, laquelle sur la surface d'aube (210) est orientée sur le côté opposé, en affluence oblique vers l'ouverture d'entrée (310).
